# EUROPÄISCHE PATENTSCHRIFT

(11) **EP 2 510 203 B1**
(45) Veröffentlichungstag und Bekanntmachung des Hinweises auf die Patenterteilung: **23.12.2015**
(21) Anmeldenummer: 10767995.3
(22) Anmeldetag: 08.10.2010
(51) Int. Cl.: F01N 3/20

(54) **ENTLÜFTUNGSELEMENT FÜR VORRATSTANK**
VENTILATION ELEMENT FOR A STORAGE TANK
ELÉMENT D'ÉVACUATION DE L'AIR POUR RÉSERVOIR DE STOCKAGE

(30) Priorität: 08.12.2009 DE 102009047637
(43) Veröffentlichungstag der Anmeldung: 17.10.2012
(73) Patentinhaber: Robert Bosch GmbH, 70442 Stuttgart (DE)
(72) Erfinder: HAEBERER, Rainer, 75015 Bretten (DE)
(86) Internationale Anmeldenummer: PCT/EP2010/065083
(87) Internationale Veröffentlichungsnummer: WO 2011/069710

(56) Entgegenhaltungen:
- EP-A1- 2 199 557
- EP-A2- 2 103 473
- DE-A1-102006 027 487
- DE-A1-102006 061 735
- DE-A1-102007 061 808

## Beschreibung

### Stand der Technik

Bei Kraftfahrzeugen mit Verbrennungskraftmaschinen muss aufgrund der in den nächsten Jahren anstehenden verschärften Abgasgesetzgebung unter anderem der Schadstoff in NOx reduziert werden. Eine Methode, diesen Schadstoff zu reduzieren, und die bereits eingesetzt wird, ist das SCR-Verfahren (Selektive Katalytische Reaktion) gemäß dem der Schadstoff NOx unter Zuhilfenahme von flüssigem Reduktionsmittel zu N₂ und H₂O reduziert wird. Das Reduktionsmittel wird in einer Leitung vom das Reduktionsmittel bevorratenden Vorratstank zum Dosiermodul befördert. Die heute üblicherweise eingesetzten Reduktionsmittel gefrieren je nach zugesetztem Antifrostmittel zwischen -11°C und -40°C.

Um ein schnelles Auftauen des gefrorenen Mediums zu gewährleisten, ist im Vorratstank innerhalb eines nach unten offenen Topfes eine elektrische Heizung eingebaut. Somit wird die von der Heizung abgegebene Wärme zunächst zum Auftauen des Inhaltes des Topfes verwendet. Über eine ebenfalls beheizt ausgebildete Sauglanze wird die um die Heizung aufgetaute Flüssigkeit über die Sauglanze abgesaugt und ins Abgas eingegeben. Das Fördermittel regelt über die Pumpenmotordrehzahl, den Drucksensor und eine Rückströmdrossel einen konstanten Systemdruck ein. Die Rückströmmenge wird in der Regel über eine Rücklaufleitung wieder in den Heiztopf zurückgeführt.

Aufgrund der vom Vorratstank abgehenden und diesem zugehenden Flüssigkeitsmengen ist der Tankinnenraum zur Umgebung zu be- bzw. zu entlüften.

Aus der DE 10 2006 027 487 ist es bekannt, in einem Vorratstank für eine wässrige Harnstofflösung eine Funktionseinheit einzusetzen, welche eine elektrische Heizung enthält.

### Darstellung der Erfindung

Erfindungsgemäß wird vorgeschlagen, den Luftraum im topfförmigen Behälter über eine Schlauchleitung in den Luftraum des Vorratstanks zur Aufnahme des Reduktionsmediums zu entlüften. Der Luftraum des Vorratstanks steht über ein Entlüftungselement mit der Umgebung in Verbindung, wodurch ein Druckausgleich unter Berücksichtigung der Schlauchleitung sowohl des Luftraumes im Topf als auch des Luftraumes oberhalb des Tanks in die Umgebung erfolgen kann. Der Entlüftungspfad stellt sich demnach von der Unterseite des Topfes über einen sich bei Beheizung der Rücklaufleitung einstellenden Luftpfad zwischen der Mantelfläche des Rücklaufes und der Innenseite des in Eisform vorliegenden Reduktionsmittels in den oberen Luftraum im Topf ein, von dort über die Entlüftungsleitung in den Luftraum an der Oberseite des Tanks neben dem topfförmigen Behälter und von dort über das Entlüftungselement in die Umgebung.

Die Entlüftungsleitung, die sich vom Luftraum im oberen Bereich des topfförmigen Behälters in den Luftraum des Vorratstanks erstreckt, wird vorzugsweise aus einem reduktionsmittelbeständigen Werkstoff wie z.B. EPDM oder PA12 oder dergleichen gefertigt. Die Entlüftungsleitung wird sowohl am Deckel des topfförmigen Behälters als auch am Tankdeckel auf entsprechend ausgebildete vorzugsweise angespritzte Zapfen aus Kunststoffmaterial aufgeschoben und z.B. mittels eines profilierten Absatzes (Tannenbaumprofil) befestigt.

Zur Darstellung der Watfähigkeit des erfindungsgemäß vorgeschlagenen Systems ist somit lediglich der Schlauchanschluss des sich an der Oberseite befestigten Entlüftungselementes zu verlängern und in einen permanent mit Luft befüllten Raum anzuschließen. Diese Schlauchverbindung ist umso vorteilhafter, wenn der Vorratstank als Kunststoffspritzgussbauteil bzw. der Tankdeckel des Vorratstanks aus Kunststoffmaterial im Wege des Spritzgussverfahrens ausgeführt werden kann. In diesem Fall kann der Anschluss ebenso wie die Zapfen zum Aufstecken der Entlüftungsleitung allesamt an der Oberseite des Tankdeckels direkt in einem Arbeitsgang angespritzt werden, ohne dass es aufwendiger Nachbearbeitungsschritte bedürfte.

Die erfindungsgemäß vorgeschlagene Lösung bietet eine Vereinfachung der Auslegung und damit eine höhere Robustheit bei geringeren Herstellkosten aufgrund des Entfallens einer Anzahl von Teilen. Des Weiteren kann bei dem erfindungsgemäß vorvorgeschlagenen Vorratstank eine erhebliche Vereinfachung der Montage aufgrund der reduzierten Bauteilanzahl und somit eine beträchtliche Verringerung der Herstellkosten erreicht werden. In Bezug auf watfähige Systeme ist lediglich ein Schlauchanschluss erforderlich, wodurch sich ebenfalls eine starke Vereinfachung ergibt.

In einer weiteren vorteilhaften Ausführung der der Erfindung zugrunde liegenden Lösung können ein Luftraum, der sich oberhalb eines gefrorenen Inhalts eines Tanks und ein Luftraum, der sich oberhalb des gefrorenen Inhalts eines Topfs, der in den Tank eingelassen ist über eine jeweils separate Entlüftung in die Umgebung be- oder entlüftet werden. In die Anschlussstutzen eines Deckels, welcher den Topf verschließt, sowie in einem Anschlussstutzen für eine Be- bzw. Entlüftungsleitung des Tanks oberhalb eines Luftraumes können in dieser Ausführungsvariante der erfindungsgemäß vorgeschlagenen Lösung jeweils tablettenförmig ausgebildete Entlüftungselemente eingelassen werden. Durch die in dieser Ausführungsvariante vorgesehenen zwei separaten Entlüftungen ist eine Entlüftung des Tanks wie auch eine Entlüftung des Topfs möglich.

### Kurze Beschreibung der Zeichnungen

Anhand der Zeichnungen wird die Erfindung nachstehend eingehender beschrieben. Es zeigt:
- Figur 1: einen Vorratstank zur Aufnahme eines Reduktionsmittels mit einer Tankentlüftung und einer Entlüftung für einen topfförmigen Behälter im Vorratstank,
- Figur 2: eine Darstellung der Befestigung eines Entlüftungselements im Deckel des topfförmigen Behälters,
- Figur 3: eine Ausführungsvariante der erfindungsgemäß vorgeschlagenen Lösung,
- Figur 4: eine Ausführungsvariante der Abdichtung einer Entlüftungsleitung und
- Figur 5: ein watfähiges System mit einer Entlüftungsleitung, die sich durch einen Nassraum in einen Trockenraum erstreckt.

### Ausführungsvarianten

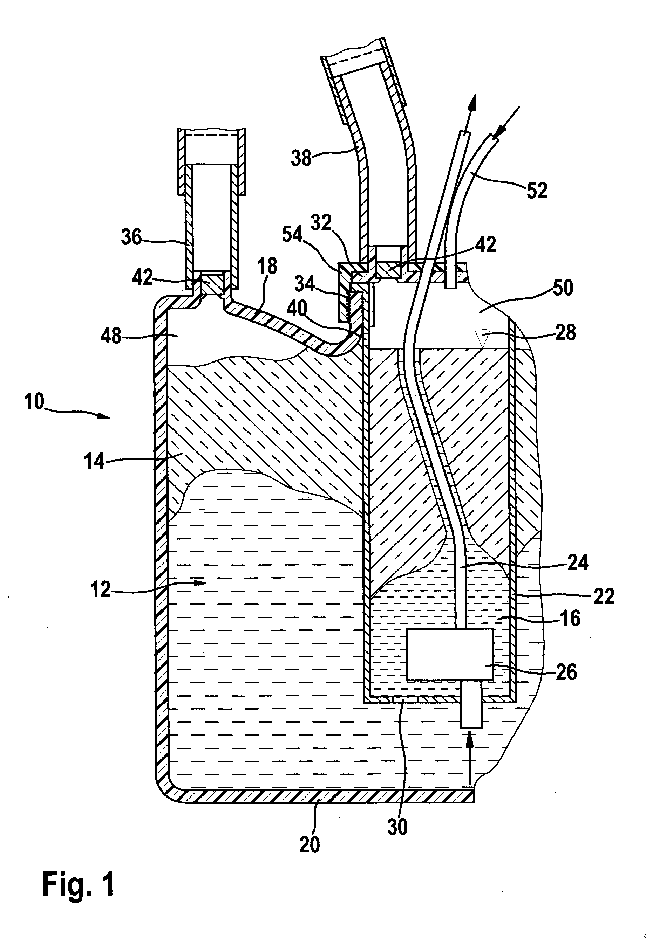

Figur 1 zeigt, dass ein Vorratstank 10 einen Reduktionsmittelvorrat 12 aufnimmt. Bei niedrigen Außentemperaturen unterhalb von -11°C beginnt das im Vorratstank 10 bevorratete Reduktionsmittel 12 zu gefrieren und es stellt sich eine feste eisförmige Phase 14 sowie eine flüssige Phase 16 im Vorratstank 10 ein. Je nach Additiven, die dem Reduktionsmittelvorrat 12 gemischt sind, erfolgt ein Gefrieren des Reduktionsmittelvorrats 12 im Vorratstank 10 bei Außentemperaturen zwischen -11°C und -40°C.

Der Vorratstank 10 umfasst einen Tankdeckel 18 sowie einen Tankboden 20 und einen an der Oberseite des Vorratstanks 10 in das Innere des Vorratstanks 10 eingelassenen topfförmigen Behälter 22. Der topfförmige Behälter 22 wiederum ist über einen Deckel 32 verschlossen. Durch den topfförmigen Behälter 22 bzw. den Deckel 32, der den topfförmigen Behälter 22 verschließt, erstreckt sich eine beheizbare Sauglanze 24. Des Weiteren ist im unteren Bereich des topfförmigen Behälters 22 eine Heizung 26 aufgenommen, die im Allgemeinen elektrisch betrieben wird. Mit Bezugszeichen 28 ist der Füllstand des Reduktionsmittelvorrats 12 im topfförmigen Behälter 22 als auch im Inneren des Vorratstanks 10 bezeichnet. An der Unterseite des topfförmigen Behälters 22 befindet sich eine Öffnung 30, über die Reduktionsmittel kontinuierlich in den topfförmigen Behälter 22 nachströmt. Der Deckel 32 des topfförmigen Behälters ist an ein Gewinde 34 durch eine Deckelverschraubung 54 befestigt. Das Gewinde 34 ist an einem entsprechend konfigurierten Stutzenelement des Tankdeckels 18 ausgebildet, an dem die Deckelverschraubung 54 zur Fixierung des Deckels 32 des topfförmigen Behälters 22 verschraubt wird.

Aus der Darstellung gemäß Figur 1 geht hervor, dass sowohl der Vorratstank 10 als auch der topfförmige Behälter 22 über jeweils eine Tankentlüftung 36 und eine Topfentlüftung 38 be- bzw. entlüftet werden. Um ein Überströmen von Luft zwischen einem Luftraum 48 im Vorratstank 10 und einem Luftraum 50 oberhalb des Füllstandes 28 des Reduktionsmittels im topfförmigen Behälter 22 zu gewährleisten, befindet sich in der Wand des topfförmigen Behälters 22 eine Öffnung 40. Wie aus der Darstellung gemäß Figur 1 hervorgeht, ist diese Öffnung 40 jedoch beim Gefrieren verschlossen, da sich die feste Phase 14 des Reduktionsmittels 12 aufgrund der Ausdehnung des Reduktionsmittels um ca. 10% beim Phasenübergang flüssig/fest ausdehnt. Eis legt sich an die Unterseite des Tankdeckels 18 an und ein Überströmen von Luft aus dem Luftraum 48 in den Luftraum 50 ist nicht mehr möglich. Aus diesem Grunde wird der Luftraum 48 über die Tankentlüftung 36 entlüftet, während der Luftraum 50 im oberen Bereich des topfförmigen Behälters 22, der durch den Deckel 32 verschlossen ist, über die Topf-Entlüftung 38 separat nach außen be- bzw. entlüftet wird.

Wie aus der Darstellung gemäß Figur 1 hervorgeht, befindet sich sowohl in der Tankentlüftung 36 als auch in der Topf-Entlüftung 38 ein Entlüftungselement 42, was in der Regel tablettenförmig ausgebildet ist.

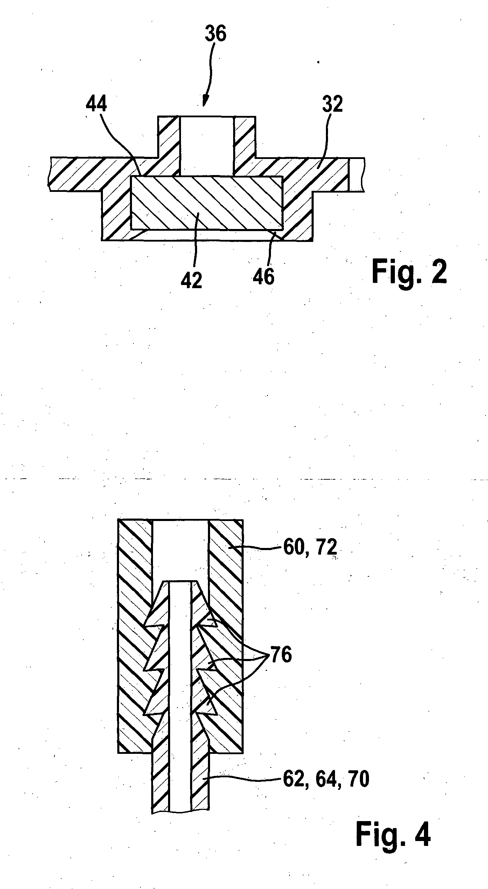

Figur 2 zeigt eine Darstellung der Befestigung des tablettenförmig ausgebildeten Entlüftungselements im Entlüftungsstutzen des topfförmigen Behälters gemäß der Darstellung in Figur 1.

Wie Figur 2 zeigt, ist das Entlüftungselement 42 im Stutzen der Tankentlüftung 36 gegen einen Bund 44 angestellt ist. Um die sichere Aufnahme des tablettenförmig konfigurierten Entlüftungselements 42 unterhalb des Bundes 44 zu gewährleisten, kann eine Warmverstemmung 46 vorgesehen sein, welche die untere Planseite des tablettenförmig ausgebildeten Entlüftungselements 42 untergreift und dieses somit unterhalb der Öffnung des Stutzens der Topf-Entlüftung 38 zuverlässig fixiert. In dieser Weise wird das tablettenförmig ausgebildete Entlüftungselement 42 über die Warmverstemmung 46 unterhalb der Topf-Entlüftung 38 fixiert. Bei der in Figur 1 dargestellten Ausführungsvariante sind aufgrund der sich bei Gefrieren ausbildenden Dichtstelle zwischen den Lufträumen 48 und 50 zwei separate Entlüftungen, nämlich die Tankentlüftung 36 sowie die Topf-Entlüftung 38 dargestellt.

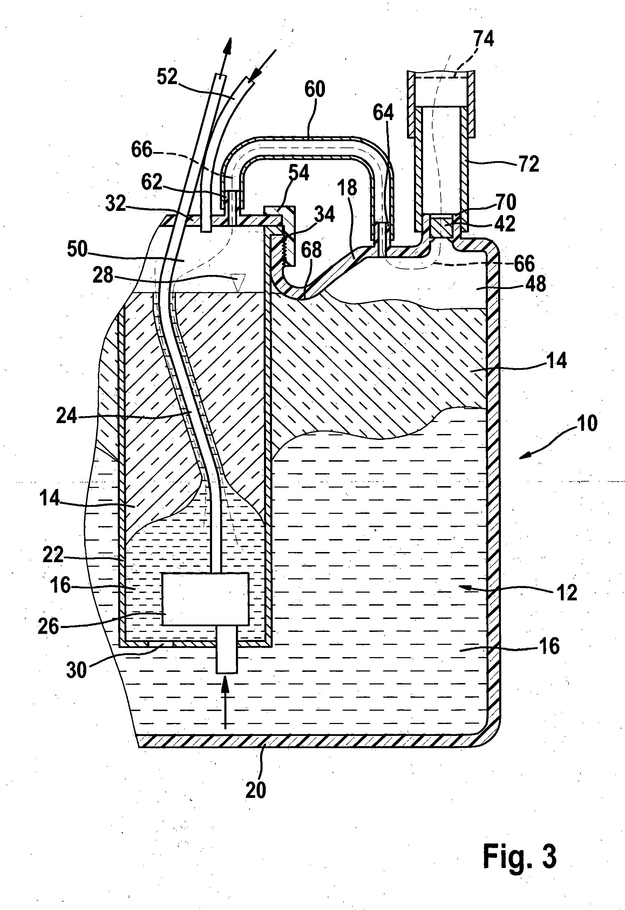

Der Darstellung gemäß Figur 3 ist eine Ausführungsvariante der erfindungsgemäß vorgeschlagenen Lösung zu entnehmen.

Wie Figur 3 zeigt, befindet sich im Vorratstank 10 zur Aufnahme des Reduktionsmittelvorrats 12 der topfförmige Behälter 22. Bei niedrigen Außentemperaturen zwischen -11°C und -40°C - je nach Zugabe von Antigefriermitteln zum Reduktionsmittelvorrat - stellt sich sowohl innerhalb des Vorratstanks 10 als auch innerhalb des topfförmigen Behälters 22 eine Phasentrennung des Reduktionsmittelvorrats 12 in die feste eisförmige Phase 14 und in die flüssige Phase 16 ein. Dadurch entstehen oberhalb des Füllstandes 28 sowohl im topfförmigen Behälter 22 als auch im Vorratstank 10 die bereits erwähnten Lufträume 48 bzw. 50. Während der topfförmige Behälter 22 durch den Deckel 32 verschlossen ist, ist der Luftraum 48 des Tanks durch den Tankdeckel 18 verschlossen. Die beiden Lufträume 48 und 50 sind durch eine Dichtstelle 68 voneinander getrennt, an der die feste eisförmige Phase 14 des Reduktionsmittelvorrats 12 an der Unterseite des Tankdeckels 18 anliegt, so dass die beiden Lufträume 48 bzw. 50 voneinander abgeschnitten sind und kein Luftaustausch zwischen diesen erfolgen kann.

Im Deckel 62 des topfförmigen Behälters 22 ist ein erster Anschluss 62 in Form eines Zapfens ausgebildet, der zur Aufnahme einer Entlüftungsleitung 60 dient. Die Entlüftungsleitung 60 erstreckt sich vom ersten Anschluss 62 an der Oberseite des Deckels 32, die den topfförmigen Behälter 22 verschließt, hin zu einem zweiten Anschluss 64, der beispielsweise an die Oberseite des Tankdeckels 18 in Zapfenform angespritzt sein kann. Die Entlüftungsleitung 60 wird bevorzugt aus einem reduktionsmittelbeständigen Material, bevorzugt aus einem flexiblen Elastomermaterial oder Thermoplast, gefertigt. Durch die Entlüftungsleitung 60 wird der Luftraum 50 oberhalb des Füllstandes 28 von Reduktionsmittel 12 im topfförmigen Behälter 22 mit dem Luftraum 48 im Vorratstank 10 unterhalb des Tankdeckels 18 verbunden, d.h. in diesen entlüftet. Dem Luftraum 48 seinerseits ist an der Oberseite des Tankdeckels 18 eine Ent- bzw. Belüftungsleitung 72, die stutzenförmig ausgebildet ist, zugeordnet und über ein Spinnensieb 74 verschlossen. Die Be- bzw. Entlüftungsleitung 72 umfasst ein tablettenförmig ausgebildetes Entlüftungselement 42, welches umschlossen vom dritten Zapfen 70 in diesen befestigt ist, und welches aus einem wasserabweisenden, hydrophobe Eigenschaften aufweisenden Material gefertigt ist.

Der Darstellung gemäß Figur 3 ist zu entnehmen, dass sich ausgehend vom unteren Bereich innerhalb des topfförmigen Behälters 22, in dem sich die Heizung 26 befindet, folgender Luftpfad 66 einstellt: Aufgrund des Umstandes, dass es sich bei der Sauglanze 24, die sich durch den topfförmigen Behälter 22 erstreckt, um eine beheizbare Sauglanze handelt, wird ein sich durch Erwärmung einstellender Luftspalt zwischen der Außenseite der beheizbaren Sauglanze 24 und der diese umschließenden festen eisförmigen Phase 14 des Reduktionsmittelvorrats 12 gebildet. Damit stehen die flüssige Phase 16, die das Heizelement 26 umgibt und der Luftraum 50 oberhalb des Füllstandes 28 des topfförmigen Behälters 22 in einer einen Druckausgleich ermöglichenden Verbindung miteinander. Entsprechend des Luftpfades 66 wird der Luftraum 50 nun mit dem Luftraum 48 des Vorratstanks 10 unterhalb des Tankdeckels 18 verbunden, so dass eine gemeinsame Be- bzw. Entlüftung beider Lufträume, d.h. des Luftraumes 48 als auch des Luftraumes 50 über ein und dieselbe Be- bzw. Entlüftungsleitung 72, die in der Ausführungsvariante gemäß Figur 3 dem Vorratstank 10 bzw. dessen Luftraum 48 zugeordnet ist, erfolgen kann.

Bevorzugt ist der Deckel 32, mit dem der topfförmige Behälter 22 verschlossen ist, als Kunststoffspritzgussbauteil gefertigt, so dass in vorteilhafter Weise sowohl eine Öffnung für einen Rücklauf 52 als auch der erste Anschluss 62 an diesem angespritzt werden können. Der Deckel 32 zum Verschließen des topfförmigen Behälters 22 wird mittels einer Deckelverschraubung 54 auf einem Außengewinde 34 des Tankdeckels 18 befestigt, was bei Fertigung des Vorratstankes 10 als Kunststoffspritzgussbauteil ebenfalls in einfacher Weise dargestellt werden kann.

Eine Abdichtung der Entlüftungsleitung 60 nach Aufstecken auf den ersten Anschluss 62 bzw. den zweiten Anschluss 64 des Tankdeckels 18 kann z.B. durch eine Tannenbaumprofilierung des ersten Anschlusses 62 bzw. des zweiten Anschlusses 64 realisiert werden, wie dies in Figur 4 dargestellt ist.

Bei einer Fertigung des Vorratstanks 10 als Spritzgussbauteil öder im Blasformverfahren aus Kunststoffmaterial können in vorteilhafter Weise der zweite Anschluss 64 als auch der dritte Anschluss 70, der zur Aufnahme des Stutzens 72 zur Be- bzw. Entlüftung dient, an diese angespritzt werden, was die Herstellungskosten günstig beeinflusst und eine großen Freiheitsgrad in Hinblick auf die Tankgeometrie des Vorratstanks 10 ermöglicht.

Zeichnerisch in Figur 3 nicht dargestellt, besteht die Möglichkeit, einen watfähigen Vorratstank 10 dadurch zu schaffen, dass auf den dritten Anschluss 70 der Be- bzw. Entlüftungsleitung 72 an der Oberseite des Tankdeckels 18 ein Schlauch aus flexiblem Material, so z.B. Kunststoffmaterial, angeschlossen wird, der sich in einen permanenten Luftraum erstreckt, so dass allzeit eine Entlüftung der Lufträume 48, 50, die über die Entlüftungsleitung 60 miteinander in Verbindung stehen, in den permanenten Luftraum gewährleistet ist. Diese Möglichkeit besteht auch bei der Ausführungsvariante gemäß Figur 1, indem jeweils Kunststoffschläuche auf die Tankentlüftung 36 und die Topfentlüftung 38 aufgestülpt werden und somit ein watfähiges System geschaffen wird.

Bei der Ausführungsvariante gemäß Figur 3 ergibt sich ein vereinfachter Aufbau des Vorratstanks 10, sei er watfähig, sei er für ein nicht-watfähiges System ausgelegt.

Das Entlüftungselement der Topf-Entlüftung 38 ist aus Gründen des Bauraumes und des zu entlüftenden Volumens stets kleiner auszulegen, als das Entlüftungselement 42 der Tank-Entlüftung 36 bzw. 72. Bei dem Entlüftungselement 42, welches bei der Tank-Entlüftung 38 eingesetzt wird, erfolgt eine Dimensionierung auf einen größeren Luftdurchsatz bei Be-/Entlüftung.

Figur 4 zeigt eine Ausführungsvariante zur Abdichtung der Be-/Entlüftungsleitung.

Zur Realisierung einer wirkungsvollen Abdichtung zwischen der Entlüftungsleitung 60 bzw. der Be- und Entlüftung 72 zwischen den Anschlüssen 62, 64 oder einem separaten dritten Anschluss 70 am Deckel des Vorratstanks 10, können an den Anschlüssen 62, 64 sowie am dritten Anschluss 70 Dichtprofilierungen 76 angebracht werden, die z.B. als Tannenbaumprofile ausgebildet sind. Drei oder mehr sich in Umfangsrichtung um das Ende der Anschlüsse 62, 64 bzw. 70 jeweils erstreckende ringförmige Abschnitte greifen im Material der Entlüftungsleitung 60 bzw. eines Entlüftungsschlauchs 60 oder der Be- bzw. Entlüftungsleitung 72, die sich vom Vorratstank 10 aus in vertikale Richtung erstreckt, ein.

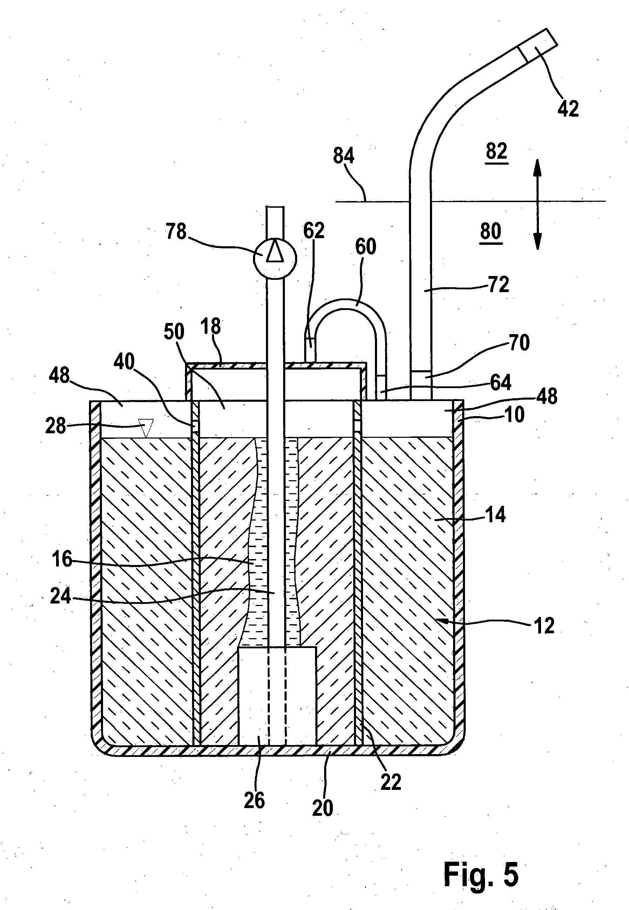

Der Darstellung gemäß Figur 5 ist ein watfähiges System mit einer Be- bzw. Entlüftung zu entnehmen, die sich durch einen Nassraum in einen Trockenraum erstreckt.

Wie aus der Darstellung gemäß Figur 5 hervorgeht, erfolgt die Be- bzw. Entlüftung des Luftraums 50 im topfförmigen Behälter 22 über die Entlüftungsleitung 60. Diese erstreckt sich vom ersten Anschluss 62 oberhalb des Luftraums 50 im topfförmigen Behälter 22 zu dem zweiten Anschluss 64, welcher mit dem Luftraum 48 im Vorratstank 10 verbunden ist. Vom Luftraum 48 im Vorratstank 10 erstreckt sich die Be- bzw. Entlüftungsleitung 72 im Wesentlichen in vertikale Richtung. Wie aus der Darstellung gemäß Figur 5 hervorgeht, ist bei watfähigen Systemen sicherzustellen, dass der Luftraum 48 im Vorratstank 10 stets mit der Umgebung in Verbindung steht. Befindet sich das gesamte System im Nassraum 80, d.h. unterhalb eines Bezugsniveaus 84, so ist sicherzustellen, dass sich die Be- bzw. Entlüftungsleitung 72 mit daran aufgenommenen Entlüftungselementen 42 sicher in einen Trockenraum 82 erstreckt, so dass stets eine luftführende Verbindung zwischen dem Luftraum 48 im Vorratstank 10 und der Umgebung sichergestellt ist. Je nach zulässiger Wattiefe des Fahrzeugs, die auch von anderen Parametern abhängt, ist die Länge der Be- bzw. Entlüftungsleitung 72 auszulegen.

Die übrigen Komponenten der Darstellung gemäß Figur 5 lassen sich im Wesentlichen bereits der Ausführungsvariante gemäß Figur 3 entnehmen. In der in Figur 5 dargestellten Ausführungsvariante ist der topfförmige Behälter 22 in den Vorratstank 10 eingelassen. Es lassen sich jedoch auch Tankanordnungen gestalten, bei denen der topfförmige Behälter 22 räumlich getrennt vom Vorratstank 10 angeordnet ist, wobei der topfförmige Behälter 22 und der Vorratstank 10 über die schlauchförmig ausgebildete Entlüftungsleitung 60 in Verbindung stehen können. Vom Vorratstank 10 aus erstreckt sich dann, wie in der Darstellung gemäß Figur 5 dargestellt, eine Be- bzw. Entlüftungsleitung 72 in den Trockenraum 82, je nach dem, ob es sich um ein watfähiges oder um ein nicht-watfähiges System handelt. Figur 5 ist des Weiteren zu entnehmen, dass die Heizung 26 am unteren Ende der beheizten Sauglanze 24 oberhalb des Tankbodens 20 des Vorratstanks 10 angebracht ist. Aufgrund der beheizbaren Sauglanze 24 bildet sich um diese die flüssige Phase 16, die ihrerseits von der festen Phase 14, d.h. dem gefrorenen Reduktionsmittelvorrat 12, umschlossen ist.

Der Lufttraum oberhalb des topfförmigen Behälters 22 ist mit Bezugszeichen 50 kenntlich gemacht. Analog zur Darstellung gemäß Figur 3 befindet sich in der Wand des topfförmigen Behälters 22 die Überströmöffnung 40 zwischen dem Vorratstank 10 und dem topfförmigen Behälter 22. Der Tankdeckel 18 ist durch Bezugszeichen 18 analog zur Darstellung in Figur 3 identifiziert.

## Patentansprüche

1. Vorratstank (10) zur Aufnahme eines gefrierfähigen Mediums (12), insbesondere eines Reduktionsmittels, mit mindestens einer Be-/Entlüftungsleitung (38, 36; 72) und einem in dem Vorratstank (10) eingelassenen topfförmigen Behälter (22), **dadurch gekennzeichnet, dass** ein Luftraum (50) im topfförmigen Behälter (22) über eine Entlüftungsleitung (60) mit einem Luftraum (48) des Vorratstanks (10) in Verbindung steht, der über die mindestens eine Be-/Entlüftungsleitung (38, 36; 72) be- und entlüftet
ist, wobei die Entlüftungsleitung (60) sich von einem ersten Anschluss (62) oberhalb des Luftraums (50) im topfförmigen Behälter (22) zu einem zweiten Anschluss (64) erstreckt, wobei der zweite Anschluss mit dem Luftraum (48) des Vorratstanks (10) verbunden ist, und dass der erste Anschluss (62) an einem Deckel (32) des topfförmigen Behälters (22) und der zweite Anschluss (64) an einem Tankdeckel (18) des Vorratsbehälters (10) angeordnet ist.

2. Vorratstank (10) nach Anspruch 1, **dadurch gekennzeichnet, dass** im topfförmigen Behälter (22) eine Heizung (26) aufgenommen ist und sich eine vom Reduktionsmittel (12) umgebene, beheizbare Sauglanze (24) durch den topfförmigen Behälter (22) erstreckt.

3. Vorratstank (10) gemäß Anspruch 1, **dadurch gekennzeichnet, dass** die Entlüftungsleitung (60) aus einem reduktionsmittelbeständigem Elastomer gefertigt ist.

4. Vorratstank (10) gemäß einem der vorstehenden Ansprüche, **dadurch gekennzeichnet, dass** der erste Anschluss (62), der zweite Anschluss (64) sowie ein weiterer Anschluss (70) zur Aufnahme der Be-/Entlüftungsleitung (72) an den Tankdeckel (18) oder den Vorratstank (10) angespritzt sind.

5. Vorratstank (10) gemäß einem der vorstehenden Ansprüche, **dadurch gekennzeichnet, dass** die Entlüftungsleitung (60) an den Anschlüssen (62, 64) über Dichtprofilierungen (76), insbesondere Tannenbaumprofilierungen, abgedichtet ist.

6. Vorratstank (10) gemäß Anspruch 1, **dadurch gekennzeichnet, dass** der Luftraum (48) und der Luftraum (50) über jeweils separate Be-/Entlüftungsleitungen (38, 36) be- und entlüftet sind.

7. Vorratstank (10) gemäß einem der vorstehenden Ansprüche, **dadurch gekennzeichnet, dass** die Be- bzw. Entlüftungsleitung (38, 36, 72) zur Darstellung der Watfähigkeit mindestens einen flexiblen Schlauch umfasst, der sich durch einen Nassraum (80) in einen Trockenraum (82) erstreckt.

8. Vorratstank (10) gemäß Anspruch 1, **dadurch gekennzeichnet, dass** die Be-/Entlüftungsleitungen (38, 36) jeweils ein tablettenförmig ausgebildetes Entlüftungselement (42) umfassen.

## Claims

1. Storage tank (10) for receiving a medium (12) capable of freezing, in particular a reducing agent, having at least one aeration/ventilation line (38, 36; 72) and a cup-shaped container (22) introduced into the storage tank (10), **characterized in that** an air space (50) in the cup-shaped container (22) is connected via a ventilation line (60) to an air chamber (48) of the storage tank (10), which is aerated and ventilated via the at least one aeration/ventilation line (38, 36; 72), wherein the ventilation line (60) extends from a first connection (62) above the air space (50) in the cup-shaped container (22) to a second connection (64), wherein the second connection is connected to the air space (48) of the storage tank (10), and **in that** the first connection (62) is arranged on a lid (32) of the cup-shaped container (22) and the second connection (64) is arranged on a tank lid (18) of the storage tank (10).

2. Storage tank (10) according to Claim 1, **characterized in that** a heater (26) is accommodated in the cup-shaped container (22) and a heatable suction lance (24) surrounded by the reducing agent (12) extends through the cup-shaped container (22).

3. Storage tank (10) according to Claim 1, **characterized in that** the ventilation line (60) is made of a reducing agent-resistant elastomer.

4. Storage tank (10) according to one of the preceding claims, **characterized in that** the first connection (62), the second connection (64) and a further connection (70) for receiving the aeration/ventilation line (72) are injection molded onto the tank lid (18) or the storage tank (10).

5. Storage tank (10) according to one of the preceding claims, **characterized in that** the ventilation line (60) is sealed off at the connections (62, 64) by sealing profiled sections (76), in particular Christmas tree profiled sections.

6. Storage tank (10) according to Claim 1, **characterized in that** the air space (48) and the air space (50) are aerated and ventilated via separate aeration/ventilation lines (38, 36) in each case.

7. Storage tank (10) according to one of the preceding claims, **characterized in that** the aeration/ventilation line (38, 36, 72) for constituting the fording capability comprises at least one flexible hose, which extends through a wet chamber (80) into a dry chamber (82).

8. Storage tank (10) according to Claim 1, **characterized in that** the aeration/ventilation lines (38, 36) in each case comprise a ventilation element (42) formed in the manner of a tablet.

## Revendications

1. Réservoir de stockage (10) destiné à recevoir un milieu congelable (12), en particulier un agent réducteur, comprenant au moins une conduite de ventilation/désaérage (38, 36 ; 72) et un récipient en forme de pot (22) introduit dans le réservoir de stockage (10), **caractérisé en ce qu'**un espace d'air (50) dans le récipient en forme de pot (22) est en liaison par le biais d'une conduite de désaérage (60) avec un espace d'air (48) du réservoir de stockage (10), lequel est ventilé et désaéré par le biais de l'au moins une conduite de ventilation/désaérage (38, 36 ; 72), la conduite de désaérage (60) s'étendant depuis un premier raccord (62) au-dessus de l'espace d'air (50) dans le récipient en forme de pot (22) jusqu'à un deuxième raccord (64), le deuxième raccord étant connecté à l'espace d'air (48) du réservoir de stockage (10), et **en ce que** le premier raccord (62) est disposé au niveau d'un couvercle (32) du récipient en forme de pot (22) et le deuxième raccord (64) est disposé au niveau d'un couvercle de réservoir (18) du réservoir de stockage (10).

2. Réservoir de stockage (10) selon la revendication 1, **caractérisé en ce qu'**un chauffage (26) est reçu dans le récipient en forme de pot (22) et une lance d'aspiration (24) pouvant être chauffée, entourée par l'agent réducteur (12), s'étend à travers le récipient en forme de pot (22).

3. Réservoir de stockage (10) selon la revendication 1, **caractérisé en ce que** la conduite de désaérage (60) est fabriquée en un élastomère résistant aux agents réducteurs.

4. Réservoir de stockage (10) selon l'une quelconque des revendications précédentes, **caractérisé en ce que** le premier raccord (62), le deuxième raccord (64) ainsi qu'un raccord supplémentaire (70) pour recevoir la conduite de ventilation/désaérage (72) sont surmoulés sur le couvercle de réservoir (18) ou le réservoir de stockage (10).

5. Réservoir de stockage (10) selon l'une quelconque des revendications précédentes, **caractérisé en ce que** la conduite de désaérage (60) est étanchéifiée au niveau des raccords (62, 64) par le biais de profilages d'étanchéité (76), en particulier de profilages en forme de sapin.

6. Réservoir de stockage (10) selon la revendication 1, **caractérisé en ce que** l'espace d'air (48) et l'espace d'air (50) sont ventilés et désaérés par le biais de conduites de ventilation/désaérage respectives séparées (38, 36).

7. Réservoir de stockage (10) selon l'une quelconque des revendications précédentes, **caractérisé en ce que** la conduite de ventilation/désaérage (38, 36, 72) comprend au moins un tuyau flexible pour assurer l'étanchéité, lequel s'étend travers un espace humide (80) dans un espace sec (82).

8. Réservoir de stockage (10) selon la revendication 1, **caractérisé en ce que** les conduites de ventilation/désaérage (38, 36) comprennent chacune un élément de désaérage (42) réalisé en forme de tablette.
